# EUROPEAN PATENT APPLICATION

(11) **EP 4 793 328 A1**
(43) Date of publication of application: **19.08.2026**
(21) Application number: 25849540.7
(22) Date of filing: 03.09.2025
(51) Int. Cl.: C09D 161/06, C09D 7/61, C04B 41/87, B05D 5/00

(54) **COMPOSITE SLURRY, PREPARATION METHOD THEREFOR, AND USE THEREOF**

(30) Priority: 23.12.2024 CN 202411898035
(71) Applicant: KBC Corporation, Ltd., Yiyang, Hunan 413000 (CN); KBC Carbon Ceramic Corporation, Ltd., Yiyang, Hunan 413000 (CN)
(72) Inventor: WANG, Hua, Yiyang, Hunan 413000 (CN); LI, Jun, Yiyang, Hunan 413000 (CN); LIAO, Jiqiao, Yiyang, Hunan 413000 (CN); GONG, Zhi, Yiyang, Hunan 413000 (CN); YI, Tieqiang, Yiyang, Hunan 413000 (CN); SU, Xiaogen, Yiyang, Hunan 413000 (CN); WANG, Qingyu, Yiyang, Hunan 413000 (CN)
(74) Representative: Zacco Denmark A/S
(86) International application number: PCT/CN2025/118625
(87) International publication number: WO 2026/137957

(57) **Abstract**

The application relates to a composite slurry and a preparation method and use thereof. The composite slurry includes components by mass percentage: 5% to 10% silicon particles, 55% to 65% silicon carbide particles, 5% to 10% graphite particles, and 25% to 35% a resin solution, wherein a D50 particle size of the silicon particles is in a range from 38 µm to 80 µm, the D50 particle size of the silicon particles is smaller than a D50 particle size of the silicon carbide particles, and a D50 particle size of the graphite particles is smaller than the D50 particle size of the silicon carbide particles. The composite slurry of the present application includes graphite particles, silicon particles, graphite particles, and a resin solution in specific proportions. By controlling the particle size of the silicon particles and ensuring that the particle size of the silicon carbide particles is larger than the particle sizes of both the silicon particles and the graphite particles, through mutual interaction of these characteristics, the composite slurry is allowed to form a repair layer that exhibits a high adhesion force to the coated carbon-ceramic brake disc, a high uniformity, and a high compactness.

## Description

### TECHNICAL FIELD

The present application relates to the technical field of carbon-ceramic brake discs, and in particular, to a composite slurry and a preparation method and use thereof.

### BACKGROUND

Currently, automobile brake discs are predominantly made from powder metallurgy or gray cast iron. These materials are heavy, have low melting points, and are prone to deformation. Mid-to-high-end and racing vehicles have increasingly adopted brake discs made from carbon/ceramic composite materials. Such brake discs offer advantages such as low density, high-temperature resistance, high strength, excellent friction performance, and long service life. Carbon/ceramic composite materials mainly include carbon, silicon, and silicon carbide, in which the carbon is primarily composed of two constituents: a carbon fiber and a carbon matrix. The two carbon constituents can remain stable at room temperature but are susceptible to oxidation at temperatures above 400°C. When exposed to high temperatures for extended periods, the brake discs made from carbon/ceramic composite materials may develop grooves or other damage on the surface due to oxidation. To mitigate carbon oxidation, a coated carbon-ceramic brake disc has been developed, which has a silicon carbide (SiC) coating on the surface of the brake disc. This coating not only enhances oxidation resistance but also improves friction performance. In the current market, the manufacturing cost and price of coated carbon-ceramic brake discs remain relatively high. If such carbon/ceramic brake discs are directly discarded because of surface-coating damage, it will cause significant losses. Therefore, repairing the damaged brake discs using repair agents becomes necessary. However, coatings restored with conventional repair agents exhibit poor adhesion force to the coated carbon-ceramic brake disc body.

Thus, there is a need to improve conventional technology.

### SUMMARY

In view of this, the present application provides a composite slurry that exhibits excellent adhesion force to the coated carbon-ceramic brake disc body, and its preparation method and use.

The technical solutions of the present application to address the aforementioned technical issues are as follows.

An aspect of the present application provides a composite slurry, including components by mass percentage: 5% to 10% silicon particles, 55% to 65% silicon carbide particles, 5% to 10% graphite particles, and 25% to 35% a resin solution, wherein a D50 particle size of the silicon particles is in a range from 38 µm to 80 µm, the D50 particle size of the silicon particles is smaller than a D50 particle size of the silicon carbide particles, and a D50 particle size of the graphite particles is smaller than the D50 particle size of the silicon carbide particles.

In some embodiments, in the composite slurry, the D50 particle size of the graphite particles is smaller than the D50 particle size of the silicon particles.

In some embodiments, in the composite slurry, a ratio of the D50 particle size of the silicon particles to the D50 particle size of the silicon carbide particles is in a range from 0.3:1 to 0.96:1.

In some embodiments, in the composite slurry, a ratio of the D50 particle size of the graphite particles to the D50 particle size of the silicon carbide particles is in a range from 0.05:1 to 0.5:1.

In some embodiments, in the composite slurry, the D50 particle size of the silicon carbide particles is in a range from 40 µm to 150 µm.

In some embodiments, in the composite slurry, the D50 particle size of the graphite particles is in a range from 10 µm to 20 µm.

In some embodiments, in the composite slurry, a surface of the silicon carbide particles is loaded with the silicon particles and the graphite particles.

In some embodiments, in the composite slurry, a mass ratio of the graphite particles to the silicon carbide particles is in a range from 1:10 to 1:13.

In some embodiments, in the composite slurry, a solid content of the resin solution is in a range from 70% to 80%.

In some embodiments, in the composite slurry, the resin solution includes a phenolic resin solution.

An aspect of the present application provides a method for preparing a composite slurry, including the following steps:
providing raw materials according to the above-described composite slurry;
mixing the silicon particles, the silicon carbide particles, the graphite particles, and the resin solution to obtain the composite slurry.

An aspect of the present application provides use of the above-described composite slurry in repairing a coated carbon-ceramic brake disc.

In some embodiments, the use in repairing the coated carbon-ceramic brake disc includes following steps:
applying the composite slurry to a region to be repaired of a coated carbon-ceramic brake disc body to form a repair layer, thereby obtaining a coated carbon-ceramic brake disc disposed with the repair layer; and
subjecting the coated carbon-ceramic brake disc disposed with the repair layer to molten silicon infiltration.

In some embodiments, in the use in repairing the coated carbon-ceramic brake disc, the molten silicon infiltration includes following steps:
placing the coated carbon-ceramic brake disc disposed with the repair layer in a silicon infiltration furnace, introducing a silicon powder, and allowing the silicon powder to melt and infiltrate via capillary force, thereby connecting the repair layer to the coated carbon-ceramic brake disc body.

In some embodiments, in the use in repairing the coated carbon-ceramic brake disc, prior to the step of applying the composite slurry to the region to be repaired of the coated carbon-ceramic brake disc body, the use further includes a step of sequentially cleaning and drying the region to be repaired of the coated carbon-ceramic brake disc body.

In some embodiments, in the use in repairing the coated carbon-ceramic brake disc, after the step of applying the composite slurry to the region to be repaired of the coated carbon-ceramic brake disc body, the use further includes a step of sequentially curing and polishing the composite slurry applied to the region to be repaired of the coated carbon-ceramic brake disc body to form the repair layer.

In some embodiments, in the use in repairing the coated carbon-ceramic brake disc, after the step of the molten silicon infiltration, the use further includes performing a surface treatment on the coated carbon-ceramic brake disc obtained after the molten silicon infiltration.

Compared with existing technologies, the composite slurry of the present application has the following beneficial effects:
The composite slurry of the present application includes graphite particles, silicon particles, graphite particles, and a resin solution in specific proportions. By controlling the particle size of the silicon particles and ensuring that the particle size of the silicon carbide particles is larger than the particle size of both the silicon particles and the graphite particles, through mutual interaction of these characteristics, the composite slurry is allowed to form a repair layer that exhibits a high adhesion force to the coated carbon-ceramic brake disc, a high uniformity, and a high compactness.

### DETAILED DESCRIPTION

The present application is further described in detail below in conjunction with embodiments and examples. It should be understood that these embodiments and examples are only used to illustrate the present application and are not intended to limit the scope of the present application, and that these embodiments and examples are provided for the purpose of enabling a more thorough and comprehensive understanding of the content of the present application.

It should also be understood that the present application can be realized in many different forms, and is not limited to the embodiments and examples described herein. The person skilled in the art can make various changes or modifications without departing from the concept of the present application, and the equivalent forms obtained also fall within the protection scope of the present application. For example, a feature stated or described as part of one embodiment can be combined in another embodiment in a suitable manner to obtain a new embodiment. Furthermore, in the description below, a great deal of details is given in order to provide a comprehensive understanding of the present application, and it should be understood that the present application can be implemented without one or more of these details.

Unless defined otherwise, all technical and scientific terms used herein have the same meaning as commonly understood by those skilled in the art of the present application. The terms used in the specification of the present application are for the purpose of describing embodiments and examples only and are not intended to limit the present application.

Unless otherwise stated or there is a contradiction, terms or phrases used herein have the following meanings.

In the present application, the terms "a plurality of", "multiple", "many times" and the like refer to a number equal to or greater than 2, unless otherwise specified. For example, "one or more" means one, two or more.

In the present application, terms "a combination thereof", "any combination thereof", "any combination manner thereof", and the like used herein, include all suitable combinations of any two or more of the listed items.

In the present application, "suitable" in the terms such as "suitable combination manner", "suitable manner", and "any suitable manner", is defined as being capable of implementing the technical solutions as described in the present application, solving the technical problems as described in the present application, and realizing the expected technical effects as described in the present application.

In the present application, the terms "preferably", "better", "preferred" and "appropriate" are only used to describe embodiments or examples with better effects, and it should be understood that they do not constitute a limitation on the protection scope of the present application. If there are multiple "preferably" in a same technical solution, without otherwise specified and without a contradiction or mutual restriction, each "preferably" is considered independently from each other.

In the present application, "further", "furthermore", "particularly", etc., are used for descriptive purposes, indicating differences in content, but should not be construed as limiting the protection scope of the present application.

The terms "optionally", "optional", and "may" indicate that the specified features can be present or absent, indicating a choice between two parallel solutions of "having" or "not having". If there are more than one "optional" in a technical solution, without otherwise specified and without contradictions or mutual constraints, each "optional" choice is considered independently.

In the present application, the terms "first", "second" "third", and "fourth" in phrases such as "first aspect," "second aspect," "third aspect," and "fourth aspect" are used solely for descriptive purposes. They should not be interpreted as indicating or implying relative importance or quantity, nor should they suggest the significance or number of the technical features referenced. Furthermore, the terms "first", "second" "third", and "fourth" are used solely for the purpose of non-exhaustive enumeration and description, and it should be understood that they do not constitute a closed limitation on quantity.

In the present application, an open-ended description for the technical features includes not only a close-ended technical solution consisting of the recited technical features, but also an open-ended technical solution including the recited technical features.

In the present application, unless otherwise specified, when a numerical interval (i.e., a numerical range) is referred to, the suitable values are considered as continuously distributed within this numerical interval and include both endpoints of the numerical interval (i.e., the minimum value and the maximum value), as well as every value between the two endpoints. Unless otherwise specified, when a numerical interval is referred to as encompassing only integers within the numerical interval, it includes the integers at both endpoints of the numerical interval, and every integer between the endpoints, being equivalent to directly listing each integer. When multiple numerical ranges are provided to describe a feature or a characteristic, these numerical ranges can be combined. In other words, numerical ranges disclosed herein are to be construed to include any or all sub-ranges subsumed therein, unless otherwise specified. The "value" in the numerical interval can be any quantitative value, such as a number, a percentage, a ratio, etc. The "numerical interval" can broadly include percentage intervals, ratio intervals, proportion intervals, and other types of numerical interval.

Unless otherwise defined, in the present application, a temperature parameter is allowed to involve a constant-temperature treatment, or with variation in a certain temperature interval. It should be understood that the constant-temperature treatment allows the temperature to fluctuate within the precision range under the control of an instrument, such as fluctuate within the ranges of ±5 °C, ±4 °C, ±3 °C, ±2 °C, or ±1 °C.

In the present application, the term "room temperature" or "normal temperature" generally refers to 4 °C to 35 °C, for example, 20 °C±5 °C. In some embodiments of the present application, "room temperature" or "normal temperature" refers to 10 °C to 30 °C. In some embodiments of the present application, "room temperature" or "normal temperature" refers to 20 °C to 30 °C.

In the present application, for unit of a numerical range, if the unit only appears after the right endpoint, it means that the units of both the left endpoint and the right endpoint are the same. For example, "3 to 5 h" denotes that the unit hour (h) applies to both the left endpoint "3" and the right endpoint "5".

All documents referred to in the present application are incorporated by reference in the present application as if each document is individually incorporated by reference. Unless there is a conflict with the objects and/or the technical solutions of the present application, the cited documents involved in the present application are incorporated in their entireties and for all purposes. When the present application cites documents, the definitions of relevant technical features, terms, norms, phrases, and the like in the cited documents are also cited. When the present application cites documents, the examples and preferred modes of the related technical features that are cited can also be incorporated into the present application by reference, provided that the present application can be implemented. It should be understood that when the cited contents conflict with the description of the present application, the present application should prevail or the cited contents shall be adaptively modified according to the description of the present application.

The weights or masses of related components mentioned in the embodiments or examples of the present application not only refer to specific contents of the components, but also represent proportional relationships between the weights or masses of the components. Therefore, enlargement or reduction in scale according to the contents of the related components in the present application should be within the scope disclosed by the present application. Specifically, the units of the masses or weights described in the embodiments or examples of the present application may be well known in the chemical industry, such as microgram (µg), milligram (mg), gram (g), or kilogram (kg).

Regarding the repair process for non-coated carbon-ceramic brake discs, carbon fiber cloth is used as a carrier and the repair involves resin bonding and impregnation, carbonization, and silicon infiltration. This production process has a long production period, cumbersome operation, and relatively high repair cost. Moreover, the defects in these repaired parts are primarily filled with carbon fiber cloth, which is prone to oxidation at temperatures above 400 °C. During normal braking operations, the temperature of brake discs typically exceeds 400 °C, resulting in a relatively short service life.

An embodiment of the present application provides a composite slurry, including the following components: 5% to 10% silicon particles, 55% to 65% silicon carbide particles, 5% to 10% graphite particles, and 25% to 35% a resin solution, wherein a D50 particle size of the silicon particles is in a range from 38 µm to 80 µm, the D50 particle size of the silicon particles is smaller than a D50 particle size of the silicon carbide particles, and a D50 particle size of the graphite particles is smaller than the D50 particle size of the silicon carbide particles.

The composite slurry of the present application includes graphite particles, silicon particles, graphite particles, and a resin solution in specific proportions. By controlling the particle size of the silicon particles and ensuring that the particle size of the silicon carbide particles is larger than the particle size of both the silicon particles and the graphite particles, through mutual interaction of these characteristics, the composite slurry is allowed to form a repair layer that exhibits a high adhesion force to the coated carbon-ceramic brake disc, a high uniformity, and a high compactness.

Among others, the reaction between graphite and silicon causes a relatively small shrinkage, which effectively enhances the adhesion force between the repair layer formed by the composite slurry and the coated carbon-ceramic brake disc, and also effectively promotes the compactness of the repair layer. By controlling the particle size of the silicon particles, the voids formed during their melting are smaller, which effectively improves the uniformity between the repair layer and the coating of the coated carbon-ceramic brake disc body, as well as effectively enhances the compactness of the repair layer.

It has been found through studies that when graphite particles are replaced by carbon particles, gaps exist between the repair layer formed from such composite slurry and the coating of the coated carbon-ceramic brake disc body, resulting in relatively low adhesion force between the repair layer and the coated carbon-ceramic brake disc, thereby affecting the qualification rate of the repair. Analysis suggests that this is attributed to the relatively high shrinkage rate during the reaction between carbon particles and silicon particles.

If the particle size of the silicon particles is too large, the adhesion force between the repair layer and the coated carbon-ceramic brake disc would also decrease. Analysis suggests that during the molten silicon infiltration stage, the silicon particles can melt into a liquid state, and large silicon particles can leave large voids in that area, hindering compactness and leading to the formation of pores on the coating surface, which causes a decline in the adhesion force between the repair layer and the coated carbon-ceramic brake disc.

It should be understood that in the composite slurry, by mass percentage, the mass percentage of the silicon particles includes, but is not limited to 5%, 6%, 7%, 8%, 9%, or 10%; the mass percentage of the silicon carbide particles includes, but is not limited to 55%, 56%, 57%, 58%, 59%, 60%, 61%, 62%, 63%, 64%, 65%, 66%, 67%, 68%, 69%, 70%, 71%, 72%, 73%, 74%, or 75%; the mass percentage of the graphite particles includes, but is not limited to 5%, 6%, 7%, 8%, 9%, or 10%; the mass percentage of the resin solution includes, but is not limited to 25%, 26%, 27%, 28%, 29%, 30%, 31%, 32%, 33%, 34%, or 35%.

It should be understood that in the composite slurry, a mass ratio of the silicon particles to the silicon carbide particles is in a range from 1:5.5 to 1:13. Further, the mass ratio of the silicon particles to the silicon carbide particles includes, but is not limited to 1:5.5, 1:6, 1:7, 1:8, 1:9, 1:10, 1:11, 1:12, or 1:13.

It should be understood that in the composite slurry, a mass ratio of the graphite particles to the silicon carbide particles is in a range from 1:5.5 to 1:13. Further, the mass ratio of the graphite particles to the silicon carbide particles includes, but is not limited to 1:5.5, 1:6, 1:7, 1:8, 1:9, 1:10, 1:11, 1:12, or 1:13. Optionally, the mass ratio of the graphite particles to the silicon carbide particles is in a range from 1:10 to 1:13.

In some examples, in the composite slurry, the D50 particle size of the graphite particles is smaller than the D50 particle size of the silicon particles.

In some examples, in the composite slurry, a ratio of the D50 particle size of the silicon particles to the D50 particle size of the silicon carbide particles is in a range from 0.3:1 to 0.96:1.

It should be understood that, the ratio of the D50 particle size of the silicon particles to the D50 particle size of the silicon carbide particles includes, but is not limited to 0.3:1, 0.38:1, 0.4:1, 0.5:1, 0.53:1, 0.6:1, 0.7:1, 0.76:1, 0.8:1, 0.9:1, or 0.96:1.

In some examples, in the composite slurry, a ratio of the D50 particle size of the graphite particles to the D50 particle size of the silicon carbide particles is in a range from 0.05:1 to 0.5:1.

It should be understood that, the ratio of the D50 particle size of the graphite particles to the D50 particle size of the silicon carbide particles includes, but is not limited to 0.05:1, 0.06:1, 0.1:1, 0.15:1, 0.2:1, 0.3:1, 0.4:1, or 0.5:1.

It should be understood that the D50 particle size of the silicon particles includes but is not limited to 38 µm, 40 µm, 42 µm, 45 µm, 48 µm, 50 µm, 52 µm, 55 µm, 58 µm, 60 µm, 62 µm, 65 µm, 68 µm, 70 µm, 72 µm, 75 µm, 78 µm, or 80 µm. In some examples, the D50 particle size of the silicon particles can be within a range defined by any two of these point values as endpoints. The same applies below.

In some examples, in the composite slurry, the D50 particle size of the silicon carbide particles is in a range from 40 µm to 150 µm.

It should be understood that, the D50 particle size of the silicon carbide particles includes, but is not limited to 40 µm, 42 µm, 45 µm, 48 µm, 50 µm, 52 µm, 55 µm, 58 µm, 60 µm, 62 µm, 65 µm, 68 µm, 70 µm, 72 µm, 75 µm, 78 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm.

In some examples, in the composite slurry, the D50 particle size of the graphite particles is in a range from 10 µm to 20 µm.

It should be understood that, the D50 particle size of the graphite particles includes, but is not limited to 10 µm, 11 µm, 12 µm, 13 µm, 14 µm, 15 µm, 16 µm, 17 µm, 18 µm, 19 µm, or 20 µm.

In some examples, in the composite slurry, surfaces of the silicon carbide particles are loaded with particles and graphite particles.

It should be understood that the silicon particles and graphite particles are at least partially loaded on the surfaces of the silicon carbide particles. Further, it should be understood that the silicon particles and graphite particles are partially or entirely loaded on the surfaces of the silicon carbide particles.

By controlling the particle sizes of the silicon particles, silicon carbide particles, and graphite particles, the size difference among the three particles is relatively small, leading to superior mixing uniformity, which can further enhance the adhesion force and uniformity between the repair layer formed from the composite slurry and the coated carbon-ceramic brake disc body, and increases the compactness of the repair layer.

In some examples, in the composite slurry, a solid content of the resin solution is in a range from 70% to 80%.

In comparison, the direct use of resin as a binder requires pressing at a relatively high temperature and under a certain pressure, which has a risk of damage to the coated carbon-ceramic brake disc, compromising its body coating and internal fiber structure, thereby reducing its mechanical properties. The present application adopts the form of a resin solution and controls the solid content thereof, effectively enhancing the adhesion force between the repair layer formed from the composite slurry and the coated carbon-ceramic brake disc, eliminating the need for external pressing and achieving non-destructive repair. Moreover, the resin carbon formed by the carbonization of the polymer resin reacts with silicon, further improving the adhesion force between the repair layer and the coated carbon-ceramic brake disc.

It should be understood that the solid content of the resin solution includes but is not limited to 70%, 71%, 72%, 73%, 74%, 75%, 76%, 77%, 78%, 79%, or 80%.

In some examples, in the composite slurry, the resin solution includes a phenolic resin solution.

It should be understood that the phenolic resin solution can be cured at room temperature.

An embodiment of the present application provides a method for preparing a composite slurry, including the following steps:
providing raw materials according to the above-described composite slurry;
mixing the silicon particles, the silicon carbide particles, the graphite particles, and the resin solution to obtain the composite slurry.

The reaction between graphite particles and silicon causes a relatively small shrinkage rate, which effectively enhances the adhesion force between the repair layer formed by the composite slurry and the coated carbon-ceramic brake disc, and also effectively promotes the compactness of the repair layer. By controlling the particle size of the silicon particles, the voids formed during their melting are smaller, which effectively improves the uniformity between the repair layer and the coating of the coated carbon-ceramic brake disc body, as well as effectively enhances the compactness of the repair layer. By controlling the particle size of the silicon carbide particles to be larger than those of the silicon particles and graphite particles, the surfaces of the silicon carbide particles can be loaded with silicon particles and graphite particles, which facilitates the subsequent silicon infiltration reaction, thereby improving the adhesion force and uniformity between the repair layer and the coating of the coated carbon-ceramic brake disc body, as well as the compactness of the repair layer.

In some examples, in the method for preparing the composite slurry, the silicon particles, the silicon carbide particles, the graphite particles, and the resin solution are mixed and then stirred. Further, equipment for stirring is high-pressure pneumatic stirring equipment. Further, a time period of the stirring is in a range from 2 h to 3 h.

An embodiment of the present application provides use of the above-described composite slurry or the composite slurry prepared by the above-described method in repairing a coated carbon-ceramic brake disc.

In some examples, the use in repairing the coated carbon-ceramic brake disc includes the following steps:
applying the above-described composite slurry or the composite slurry prepared by the above-described method to a region to be repaired of a coated carbon-ceramic brake disc body to form a repair layer, thereby obtaining a coated carbon-ceramic brake disc disposed with the repair layer; and
subjecting the coated carbon-ceramic brake disc disposed with the repair layer to molten silicon infiltration.

It should be understood that another embodiment of the present application provides a method for repairing a coated carbon-ceramic brake disc, including the following steps:
applying the above-described composite slurry or the composite slurry prepared by the above-described method to a region to be repaired of a coated carbon-ceramic brake disc body to form a repair layer, thereby obtaining a coated carbon-ceramic brake disc disposed with the repair layer; and
subjecting the coated carbon-ceramic brake disc disposed with the repair layer to molten silicon infiltration.

In some examples, in the use in repairing the coated carbon-ceramic brake disc, the molten silicon infiltration includes following steps:
placing the coated carbon-ceramic brake disc disposed with the repair layer in a silicon infiltration furnace, introducing a silicon powder, and allowing the silicon powder to melt and infiltrate via capillary force, thereby connecting the repair layer to the coated carbon-ceramic brake disc body.

In some examples, in the use in repairing the coated carbon-ceramic brake disc, the D50 particle size of the silicon powder is in a range from 6 mm to 10 mm.

In some embodiments, in the use in repairing the coated carbon-ceramic brake disc, the molten silicon infiltration is conducted at a temperature of 1450 °C to 1500 °C and a vacuum level of less than 1 kPa for a time period of 2 h to 3 h.

It should be understood that after the step of introducing the silicon powder and prior to the step of allowing the silicon powder to melt and infiltrate via capillary force, the use further includes a step of vacuumizing and heating the silicon infiltration furnace.

It should be understood that in the step of placing the carbon-ceramic brake disc disposed with the repair layer in the silicon infiltration furnace, the carbon-ceramic brake disc disposed with the repair layer is first placed in a graphite fixture, and then the fixture is placed in the silicon infiltration furnace.

The graphite fixture is adopted for the purpose of preventing silicon absorption.

In some examples, in the use in repairing the coated carbon-ceramic brake disc, prior to the step of applying the composite slurry to the region to be repaired of the coated carbon-ceramic brake disc body, the use further includes a step of sequentially cleaning and drying the region to be repaired of the coated carbon-ceramic brake disc body.

The impurities at the region to be repaired is cleaned away to improve the adhesion force and performance after repair.

In some examples, in the use in repairing coated carbon-ceramic brake discs, the cleaning is conducted using ultrasonic waves. Further, a frequency of the cleaning is 50 kHz, and a time period of the cleaning is in a range from 20 min to 30 min.

In some examples, in the use in repairing coated carbon-ceramic brake discs, drying is carried out in a constant-temperature drying oven. Further, a temperature of the drying is in a range from 120 °C to 130 °C, and a time period of the drying is in a range from 2 h to 3 h.

In some examples, in the use in repairing the coated carbon-ceramic brake disc, after the step of applying the composite slurry to the region to be repaired of the coated carbon-ceramic brake disc body, the use further includes sequentially curing and polishing the composite slurry applied to the region to be repaired of the coated carbon-ceramic brake disc body to form the repair layer.

It should be understood that when phenolic resin solution is used as the binder, the curing can be conducted at room temperature. Furthermore, a time period of the curing is in a range from 6 h to 8 h.

In some examples, in the use in repairing the coated carbon-ceramic brake disc, after the step of the molten silicon infiltration, the use further includes a step of performing a surface treatment on the coated carbon-ceramic brake disc obtained after the molten silicon infiltration.

It should be understood that, in some examples, the use in repairing coated carbon-ceramic brake discs includes the following steps:
step S1: Sequentially cleaning and drying the region to be repaired of the coated carbon-ceramic brake disc body.
step S2: Applying the above-described composite slurry or the composite slurry prepared by the above-described method to the region to be repaired of the coated carbon-ceramic brake disc body after drying in step S1, and then sequentially curing and polishing the composite slurry applied to the region to be repaired of the coated carbon-ceramic brake disc body to form the repair layer, thereby obtaining the coated carbon-ceramic brake disc body disposed with the repair layer.
Step S3: Subjecting the coated carbon-ceramic brake disc disposed with the repair layer obtained in step S2 to molten silicon infiltration.
Step S4: Performing a surface treatment on the coated carbon-ceramic brake disc obtained after the molten silicon infiltration in step S3.

The above-described composite slurry or the composite slurry prepared by the above-described method is used to repair the region to be repaired of the coated carbon-ceramic brake disc body. The resulting repair layer exhibits high adhesion force and good compatibility with the coated carbon-ceramic brake disc body. Additionally, the repair process is simple and non-destructive and has a short period, with a highly uniform repair layer resulted, a good process stability, a low repair cost, a high repair yield, a high strength, and an excellent friction and wear performance.

The present application is further described in detail with reference to specific embodiments. However, the embodiments of the present application are not limited thereto.

### Example 1

(1) A surface of a coating of a carbon-ceramic brake disc to be repaired was cleaned by ultrasonic water washing to remove debris thereon, and then dried. The ultrasonic washing was conducted for a time period of 20 min at a cleaning frequency of 50 kHz. The drying equipment was a constant temperature drying oven, the drying temperature was 120 °C, and the drying time period was 2 h to 3 h.
(2) Silicon powder, silicon carbide powder, graphite powder, and a resin solution, as raw materials, were mixed in a mass percentage ratio of 5% : 65% : 5% : 25%, and then stirred to obtain a uniform repair agent. The resin solution was a phenolic resin solution with a solid content of 80%. In the repair agent, the D50 particle size of the silicon particles was 38 µm, the D50 particle size of the silicon carbide particles was 50 µm, and the D50 particle size of the graphite particles was 20 µm.
(3) The repair agent was filled to a surface in a region to be repaired of the coating of the coated carbon-ceramic brake disc after cleaning in step (1). The filled region was polished to be smooth by a sandpaper after the repair agent in the region to be repaired was completely cured.
(4) The carbon-ceramic brake disc treated in step (3) was placed into a graphite fixture, and silicon particles with a particle size of 10 mm were placed in the repair region. The graphite fixture was then placed into a high-temperature silicon infiltration furnace. The furnace was vacuumed and then heated, and molten silicon infiltration was performed at a temperature of 1450°C for a time period of 2 h under a vacuum level of less than 1 kPa in the high-temperature silicon infiltration furnace.
(5) The carbon-ceramic brake disc after the molten silicon infiltration was subjected to finish machining, i.e., surface treatment, and obtain the repaired coated carbon-ceramic brake disc.

### Example 2

This example was substantially the same as Example 1, except that in the repair agent in step (2), the mass percentage ratio of the raw materials, namely the silicon powder, the silicon carbide powder, the graphite powder, and the resin solution, was 5% : 60% : 5% : 30%.

### Example 3

This example was substantially the same as Example 1, except that in the repair agent in step (2), the mass percentage ratio of the raw materials, namely the silicon powder, the silicon carbide powder, the graphite powder, and the resin solution, was 10% : 55% : 5% : 25%.

### Example 4

This example was substantially the same as Example 1, except that in the repair agent in step (2), the D50 particle size of the silicon particles was 48 µm, the D50 particle size of the silicon carbide particles was 50 µm, and the D50 particle size of the graphite particles was 20 µm.

### Example 5

This example was substantially the same as Example 1, except that in the repair agent in step (2), the D50 particle size of the silicon particles was 38 µm, the D50 particle size of the silicon carbide particles was 100 µm, and the D50 particle size of the graphite particles was 20 µm.

### Example 6

This example was substantially the same as Example 1, except that in the repair agent in step (2), the D50 particle size of the silicon particles was 50 µm, the D50 particle size of the silicon carbide particles was 100 µm, and the D50 particle size of the graphite particles was 15 µm.

### Example 7

This example was substantially the same as Example 1, except that in the repair agent in step (2), the D50 particle size of the silicon particles was 80 µm, the D50 particle size of the silicon carbide particles was 150 µm, and the D50 particle size of the graphite particles was 10 µm.

### Comparative Example 1

This comparative example was substantially the same as Example 1, except that in the repair agent in step (2), the graphite powder was replaced with an equal mass of carbon powder. The D50 particle size of the carbon particles in the prepared repair agent is 20 µm.

### Comparative Example 2

This comparative example was substantially the same as Example 1, except that in the repair agent in step (2), the D50 particle size of the silicon particles is 2 mm.

### Comparative Example 3

This comparative example was substantially the same as Example 1, except that in the repair agent in step (2), the D50 particle size of the silicon carbide particles is 15 µm, the D50 particle size of the silicon particles is greater than that of the silicon carbide particles, and the D50 particle size of the graphite particles is greater than that of the silicon carbide particles.

Some component parameters of the repair agents involved in the examples and comparative examples are shown in Table 1. The "silicon particles : silicon carbide particles" refers to the ratio of the D50 particle size of the silicon particles to the D50 particle size of the silicon carbide particles. The "graphite particles : silicon carbide particles" refers to the ratio of the D50 particle size of the graphite particles to the D50 particle size of the silicon carbide particles.

**Table 1**

| Group | Mass proportion (%) | | | | D50 particle (µm) | | | Silicon particles : silicon carbide particles | Graphite particles : silicon carbide particles |
|---|---|---|---|---|---|---|---|---|---|
| | Silicon powder | Silicon carbide powder | Graphite powder | Resin solution | Silicon particles | Silicon carbide particles | Graphite particles | | |
| Example 1 | 5 | 65 | 5 | 25 | 38 | 50 | 20 | 0.76 | 0.4 |
| Example 2 | 5 | 60 | 5 | 30 | 38 | 50 | 20 | 0.76 | 0.4 |
| Example 3 | 10 | 55 | 5 | 30 | 38 | 50 | 20 | 0.76 | 0.4 |
| Example 4 | 5 | 65 | 5 | 25 | 48 | 50 | 20 | 0.96 | 0.4 |
| Example 5 | 5 | 65 | 5 | 25 | 38 | 100 | 20 | 0.38 | 0.2 |
| Example 6 | 5 | 65 | 5 | 25 | 50 | 100 | 15 | 0.5 | 0.15 |
| Example 7 | 5 | 65 | 5 | 25 | 80 | 150 | 10 | 0.53 | 0.06 |
| Comparative example 1 | The graphite powder was replaced with an equal mass of carbon powder | | | | | | | | |
| Comparative example 2 | The D50 particle size of the silicon particles is 2 mm | | | | | | | | |
| Comparative example 3 | 5 | 65 | 5 | 25 | 38 | 15 | 20 | 2.5 | 1.3 |

The coated carbon-ceramic brake discs repaired in examples and comparative examples were each subjected to performance testing. The shear strength between the coating layer and the substrate was tested to characterize the adhesion force between the repair layer formed from the repair agent and the coated carbon-ceramic brake disc, with a value thereof being an average of five samples (GB/T 28889-2012). The coating layer density was measured, and the standard deviation of the densities for different samples with the same formulation ratio was calculated to characterize the uniformity of the repair layer. Compactness was characterized by the percentage of the measured density of the repair layer relative to the theoretical density of silicon carbide (silicon carbide density: 3.21). The results are shown in Table 2.

**Table 2**

| Group | Shear strength (MPa) | Density standard deviation | Percentage of the density of the coating layer relative to the theoretical density of silicon carbide (%) |
|---|---|---|---|
| Example 1 | 12.78 | 0.02795 | 92.45 |
| Example 2 | 13.97 | 0.03553 | 94.78 |
| Example 3 | 13.65 | 0.02742 | 93.56 |
| Example 4 | 13.43 | 0.03178 | 91.18 |
| Example 5 | 13.66 | 0.06702 | 94.57 |
| Example 6 | 11.98 | 0.07897 | 92.66 |
| Example 7 | 12.84 | 0.05615 | 92.90 |
| Comparative example 1 | 8.26 | 0.17860 | 89.21 |
| Comparative example 2 | 5.67 | 0.76721 | 79.61 |
| Comparative example 3 | 7.72 | 0.37234 | 85.72 |

As can be seen from Table 2, compared with Comparative Examples 1 to 3, the repair agents prepared in Examples 1 to 7 exhibit superior adhesion force, high uniformity, and high compactness.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. It should also be understood that the technical solutions obtained by those skilled in the art through logical analysis, reasoning or limited experiments on the basis of the technical solutions provided by the present application are within the scope of the appended claims of the present application. Therefore, the protection scope of the present application shall be defined by the appended claims, and the specification and drawings can be used to explain the contents of the claims.

## Claims

1. A composite slurry, comprising components by mass percentage: 5% to 10% silicon particles, 55% to 65% silicon carbide particles, 5% to 10% graphite particles, and 25% to 35% a resin solution, wherein a D50 particle size of the silicon particles is in a range from 38 µm to 80 µm, the D50 particle size of the silicon particles is smaller than a D50 particle size of the silicon carbide particles, and a D50 particle size of the graphite particles is smaller than the D50 particle size of the silicon carbide particles.

2. The composite slurry according to claim 1, wherein the D50 particle size of the graphite particles is smaller than the D50 particle size of the silicon particles.

3. The composite slurry according to claim 1, wherein the composite slurry satisfies at least one of following characteristics:
(1) a ratio of the D50 particle size of the silicon particles to the D50 particle size of the silicon carbide particles is in a range from 0.3:1 to 0.96:1;
(2) a ratio of the D50 particle size of the graphite particles to the D50 particle size of the silicon carbide particles is in a range from 0.05:1 to 0.5:1.

4. The composite slurry according to any one of claims 1 to 3, wherein the composite slurry satisfies at least one of following characteristics:
(1) the D50 particle size of the silicon carbide particles is in a range from 40 µm to 150 µm;
(2) the D50 particle size of the graphite particles is in a range from 10 µm to 20 µm;
(3) a surface of the silicon carbide particles is loaded with the silicon particles and the graphite particles.

5. The composite slurry according to any one of claims 1 to 3, wherein the composite slurry satisfies at least one of following characteristics:
(1) a solid content of the resin solution is in a range from 70% to 80%;
(2) the resin solution comprises a phenolic resin solution;
(3) a mass ratio of the graphite particles to the silicon carbide particles is in a range from 1:10 to 1:13.

6. A method for preparing a composite slurry, comprising following steps:
providing raw materials according to the composite slurry of any one of claims 1 to 5;
mixing the silicon particles, the silicon carbide particles, the graphite particles, and the resin solution to obtain the composite slurry.

7. Use of the composite slurry according to any one of claims 1 to 5 in repairing a coated carbon-ceramic brake disc.

8. The use according to claim 7, comprising following steps:
applying the composite slurry to a region to be repaired of a coated carbon-ceramic brake disc body to form a repair layer, thereby obtaining a coated carbon-ceramic brake disc disposed with the repair layer;
subjecting the coated carbon-ceramic brake disc disposed with the repair layer to molten silicon infiltration.

9. The use according to claim 8, wherein the molten silicon infiltration comprises following steps:
placing the coated carbon-ceramic brake disc disposed with the repair layer in a silicon infiltration furnace, introducing a silicon powder, and allowing the silicon powder to melt and infiltrate via capillary force, thereby connecting the repair layer to the coated carbon-ceramic brake disc body.

10. The use according to any one of claims 8 to 9, satisfying at least one of following characteristics:
(1) prior to the step of applying the composite slurry to the region to be repaired of the coated carbon-ceramic brake disc body, the use further comprises a step of sequentially cleaning and drying the region to be repaired of the coated carbon-ceramic brake disc body;
(2) after the step of applying the composite slurry to the region to be repaired of the coated carbon-ceramic brake disc body, the use further comprises a step of sequentially curing and polishing the composite slurry applied to the region to be repaired of the coated carbon-ceramic brake disc body to form the repair layer;
(3) after the molten silicon infiltration, the use further comprises a step of performing a surface treatment on the coated carbon-ceramic brake disc obtained after the molten silicon infiltration.
